# EUROPÄISCHE PATENTANMELDUNG

(11) **EP 2 946 919 A1**
(43) Veröffentlichungstag der Anmeldung: **25.11.2015**
(21) Anmeldenummer: 14168775.6
(22) Anmeldetag: 19.05.2014
(51) Int. Cl.: B32B 5/30, B32B 21/08, B32B 23/08, B32B 27/32, B65D 65/40

(54) **MEHRSCHICHTIGE LIGNOCELLULOSEWERKSTOFFE MIT INNENLIEGENDER DAMPFSPERRE**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft mehrschichtige Lignocellulosewerkstoffe, bei der mindestens eine Schicht eine Dampfsperrschicht ist und mindestens eine Dampfsperrschicht unterhalb der Oberfläche des Lignocellulosewerkstoffes liegt, und die Lignocellulosewerkstoffschichten
A) 30 bis 98 Gew.-% ein- oder mehrere lignocellulosehaltige Stoffe,
B) 0 bis 25 Gew.-% expandierte Kunststoffteilchen mit der Schüttdichte im Bereich von 10 bis 150 kg/m³,
C) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter und
D) 0 bis 68 Gew.-% Additive
enthalten, indem die Dampfsperre 0,01 bis 100 Gew.-% Polyisobutylen, 0 bis 99,99 Gew.-% weiterer Polymere und 0 bis 20 Gew.-% Additive enthält, sowie Verfahren zu deren Herstellung und die Verwendung der mehrschichtigen Lignocellulosewerkstoffe.

## Beschreibung

Die vorliegende Erfindung betrifft mehrschichtige Lignocellulosewerkstoffe, bei der mindestens eine Schicht eine Dampfsperrschicht ist und mindestens eine Dampfsperrschicht unterhalb der Oberfläche des Lignocellulosewerkstoffes liegt.

Aus US-B-5 439 749 sind Holzwerkstoffe enthaltend Holzspäne oder-fasern mit einer integrierten Dampfsperre, die in Form einer zusätzlichen Schicht in den Holzwerkstoff eingebracht wird, bekannt. Als Dampfsperrschicht wird hier ein Thermoplast, ein Duroplast oder Aluminiumfolie vorgeschlagen.

Dieser Aufbau lässt zu wünschen übrig, da Holzwerkstoffe mit derartigen Dampfsperren zur Delaminierung neigen. Diese Holzwerkstoffe lassen auch in ihrer mechanischen Festigkeit zu wünschen übrig.

Der vorliegenden Erfindung lag daher die Aufgabe zugrunde, den zuvor genannten Nachteilen abzuhelfen.

Demgemäß wurden neue und verbesserte mehrschichtige Lignocellulosewerkstoffe, bei der mindestens eine Schicht eine Dampfsperrschicht ist und mindestens eine Dampfsperrschicht unterhalb der Oberfläche des Lignocellulosewerkstoffes liegt, und die Lignocellulosewerkstoffschichten
A) 30 bis 98 Gew.-% ein- oder mehrere lignocellulosehaltige Stoffe,
B) 0 bis 25 Gew.-% expandierte Kunststoffteilchen mit der Schüttdichte im Bereich von 10 bis 150 kg_{/}m³,
C) 1 bis 50 Gew.-% eines Bindemittels, ausgewählt aus der Gruppe bestehend aus Amino-plastharz, Phenolformaldehydharz, organischem Isocyanat mit mindestens zwei Isocyanatgruppen oder deren Gemischen, gegebenenfalls mit einem Härter und
D) 0 bis 68 Gew.-% Additive
enthalten, gefunden, welche dadurch gekennzeichnet sind, dass die Dampfsperre 0,01 bis 100 Gew.-% Polyisobutylen, 0 bis 99,99 Gew.-% weiterer Polymere und 0 bis 20 Gew.-% Additive enthält.

Des Weiteren wurde ein neues und verbessertes Verfahren zur Herstellung von mehrschichtigen Lignocellulosewerkstoffen gefunden, welches dadurch gekennzeichnet ist, dass man die Komponenten
A) 30 bis 98 Gew.-% ein- oder mehrere lignocellulosehaltige Stoffe,
B) 0 bis 25 Gew.-% expandierte Kunststoffteilchen mit der Schüttdichte im Bereich von 10 bis 150 kg/m³,
C) 1 bis 50 Gew.-% eines Bindemittels, ausgewählt aus der Gruppe bestehend aus Amino-plastharz, Phenolformaldehydharz, organischem Isocyanat mit mindestens zwei Isocyanatgruppen oder deren Gemischen und
D) 0 bis 68 Gew.-% Additive
mischt, die Mischung streut, bei erhöhtem Druck und gegebenenfalls unter erhöhter Temperatur vorverpresst, mindestens 2 Schichten übereinander schichtet, wobei man zwischen diese Schichten eine Dampfsperre, die 0,01 bis 100 Gew.-% Polyisobutylen, 0 bis 99,99 Gew.-% weiterer Polymere und 0 bis 20 Gew.-% Additive enthält, einbringt und anschließend unter erhöhter Temperatur und unter erhöhtem Druck verpresst.

Die Summe der Komponenten A), B), C) und D) addiert sich zu 100 %.

Der Begriff mindestens 2 (zwei) Schichten bedeutet in der Regel 2 bis 5 Schichten, also 2, 3, 4 oder 5 Schichten, bevorzugt 2 bis 4 Schichten, also 2, 3 oder 4 Schichten, besonders bevorzugt 2 oder 3 Schichten, insbesondere 2 Schichten.

Die mehrschichtigen Lignocellulosewerkstoffe können zusätzlich auf einer Oberfläche eine Dampfsperre enthalten. Diese Dampfsperre wird in der Regel (gemeinsam) mit den anderen Dampfsperren im Inneren der mehrschichtigen Lignocellulosewerkstoffe (oder nachträglich) aufgebracht. Die mehrschichtigen Lignocellulosewerkstoffe können jedoch auch in einem nach-gelagerten Schritt mit dieser oberflächlichen Dampfsperre versehen werden.

In einer Ausführungsform kann die gestreute Mischung nach dem Vorverpressen in mindestens 2 (zwei) Schichten aufgetrennt werden. Verfahren zur Auftrennung der Schichten, beispielsweise mit Bandsägen oder Dampfschwertern, sind dem Fachmann bekannt (siehe Barbu, M.; Lerrach, K.; Pölzleitner, F.: Holztechnologie 46 (2005) 1, Seite 40 bis 44, WO-A-2007/76741 und DE-A-10 2004 006385). Zwischen die aufgetrennten Schichten wird die Dampfsperre jeweils eingebracht und die Schichten übereinander gelegt und verpresst (heiß verpresst).

In einer Ausführungsform kann man eine Mischung streuen, ggf. vorverpressen, die Dampfsperre auf die Oberfläche legen, eine weitere Mischung, die sich in ihrer Zusammensetzung ggf. von der ersten Mischung unterscheidet auf die Dampfsperre streuen, ggf. vorverpressen und diesen Vorgang solange wiederholen, bis der Schichtaufbau mit innenliegenden Dampfsperren abgeschlossen ist und anschließend verpressen (Heißverpressen).

Bei der Vorverpressung versteht man unter erhöhtem Druck in der Regel einen Druck von 5 bis 40 bar, bevorzugt 10 bis 30 bar, besonders bevorzugt 15 bis 20 bar und unter gegebenenfalls erhöhter Temperatur in der Regel eine Temperatur von 15 bis 80°C, bevorzugt 15 bis 50°C, besonders bevorzugt 15 bis 28°C (Raumtemperatur) (sog. "kalte Verpressung").

Bei der abschließenden Verpressung (sog. "Heißverpressung") versteht man unter erhöhter Temperatur in der Regel eine Temperatur von 130 bis 250°C, bevorzugt 150 bis 230°C und unter erhöhtem Druck einen Druck von 3 bis 70 bar, bevorzugt 4 bis 60 bar, besonders bevorzugt 5 bis 50 bar. Die Pressdauer liegt in der Regel zwischen 1 und 120 Sekunden, bevorzugt zwischen 2 und 60 Sekunden, besonders bevorzugt zwischen 3 und 15 Sekunden pro mm Plattendicke.

In einer besonderen Ausführungsform können auch zwei Mischungen gestreut und erhöhtem Druck und gegebenenfalls unter erhöhter Temperatur vorverpresst und anschließend übereinander geschichtet werden, wobei man zwischen diesen Schichten eine Dampfsperre, die 0,01 bis 100 Gew.-% Polyisobutylen enthält, einbringt und danach alles unter erhöhter Temperatur und unter erhöhtem Druck verpresst.

Diese Prozesse sind dem Fachmann bekannt (siehe beispielsweise Taschenbuch der Spanplattentechnik, DRW-Verlag Weinbrenner, 4. Auflage 2000, Kapitel 3.5.1 bzw. 3.5.2).

Die Anzahl der innen liegenden Dampfsperren, die nach dem erfindungsgemäßen Verfahren in den Lignocellulosewerkstoff eingebracht werden können, ist beliebig, in der Regel sind es ein bis vier, bevorzugt ein bis drei, besonders bevorzugt ein oder zwei Dampfsperren, insbesondere eine Dampfsperre.

In der Regel liegen eine oder mehrere, also 1 bis 4 innere Dampfsperren 5 bis 50%, bevorzugt 7 bis 30%, besonders bevorzugt 8 bis 20% unterhalb der Oberfläche der (fertig verpressten) mehrschichtigen Lignocellulosewerkstoffe.

Der Abstand der Dampfsperren beträgt in der Regel 1 bis 50 mm, bevorzugt 2 bis 35 mm, besonders bevorzugt 3 bis 25 mm, ganz besonders bevorzugt 5 bis 15 mm.

Die Dampfsperre kann als Granulat oder als Folie, bevorzugt als Folie, eingebracht werden.

Die Dampfsperre enthält 0,01 bis 100 Gew.-%, bevorzugt 0,1 bis 50 Gew.-%, bevorzugt 0,5 bis 10 Gew.-%, besonders bevorzugt 0,8 bis 8 Gew.-% Polyisobutylen sowie 0 bis 99,99 Gew.-% weiterer Polymere sowie 0 bis 20 Gew.-%, bevorzugt 0,1 bis 10 Gew.-%, besonders bevorzugt 1 bis 5 Gew.-% Additive.

Als Polyisobutylen eignen sich Polyisobutylene mit einem Molekulargewicht (M_{w} in g/mol) von 5.000 bis 10.000.000, bevorzugt 10.000 bis 5.000.000, besonders bevorzugt 35.000 bis 4.500.000.

Als weitere Polymere eignen sich beispielsweise Polyolefine wie Polyethylen oder Polypropylen, oder Polyamide wie PA6 oder PA6.6 oder PA4.6 oder PA12 oder Copolyamide PA6/6.6 oder PA6.6.6/12, bevorzugt Polyolefine oder Polyamide, besonders bevorzugt Polyethylene wie LDPE (Low Density Polyethylene) oder LLDPE (Linear Low Density Polyethylene).

Als Additive eignen sich beispielsweise
- Pigmente z.B. Farbpigmente wie Titandioxid,
- Lichtschutzmittel wie Benzotriazole, beispielsweise Tinuvin® 326 der BASF SE oder gehinderte Amine, beispielsweise Tinuvin® 770 der BASF SE oder Chimasorb® 2020 der BASF SE
- Antioxidantien wie Organophosphite, beispielswise Irgafos® 126 der BASF SE oder gehinderte Phenole Irganox® 1010 der BASF SE.

Die Dampfsperre hat in der Regel eine Dicke von 0,005 bis 5 mm, bevorzugt 0,01 bis 3 mm, besonders bevorzugt 0,05 bis 1 mm, ganz besonders bevorzugt 0,05 bis 0,5 mm.

Als Lignocellulosewerkstoffe werden in diesem Zusammenhang gegebenenfalls furnierte Span-, OSB - (oriented strand board) oder Faserwerkstoffe, insbesondere Holzfaserwerkstoffe wie LDF-, MDF- und HDF-Werkstoffe, bevorzugt Span- oder Faserwerkstoffe, besonders bevorzugt Faserwerkstoffe verstanden. Werkstoffe sind u.a. Platten, Fliesen, Formteile, Halbzeuge oder Komposite, bevorzugt Platten, Fliesen, Formteile oder Komposite, besonders bevorzugt Platten.

### Komponente A

Lignocellulosehaltige Stoffe sind Stoffe, die Lignocellulose enthalten. Der Gehalt an Lignocellulose kann in weiten Bereichen variiert werden und beträgt in der Regel 20 bis 100 Gew.-%, bevorzugt 50 bis 100 Gew.-%, besonders bevorzugt 85 bis 100 Gew.-%, insbesondere 100 Gew.-% Lignocellulose. Der Begriff Lignocellulose ist dem Fachmann bekannt.

Als ein- oder mehrere lignocellulosehaltige Stoffe eignen sich beispielsweise Stroh, holzfaserhaltige Pflanzen, Holz oder deren Gemische. Unter mehreren lignocellulosehaltigen Stoffen werden in der Regel 2 bis 10, bevorzugt 2 bis 5, besonders bevorzugt 2 bis 4, insbesondere 2 oder 3 unterschiedliche lignocellulosehaltige Stoffe verstanden.

Als Holz eignen sich Holzfasern oder Holzpartikel wie Holzlagen, Holzstreifen, Holzspäne, Holzstaub oder deren Gemische, bevorzugt Holzspäne, Holzfasern, Holzstaub oder deren Gemische, besonders bevorzugt Holzspäne, Holzfasern oder deren Gemische. Als holzfaserhaltige Pflanzen eigenen sich beispielsweise Flachs, Hanf oder deren Gemische.

Ausgangsmaterialien für Holzpartikel oder Holzfasern sind in der Regel Durchforstungshölzer, Industrieresthölzer und Gebrauchthölzer sowie holzfaserhaltige Pflanzen bzw. Pflanzenteile.

Für die Herstellung der Holzpartikel oder Holzfasern kommt jede beliebige Holzart in Frage, bevorzugt Fichten-, Buchen-, Kiefern-, Lärchen-, Linden-, Pappeln-, Eschen-, Kastanien-, Tannenholz oder deren Gemische, besonders bevorzugt Fichten-, Buchenholz oder deren Gemische, insbesondere Fichtenholz.

Die lignocellulosehaltigen Stoffe werden erfindungsgemäß in der Regel zerkleinert und als Partikel oder Fasern eingesetzt.

Als Partikel eignen sich Sägespäne, Holzspäne, Hobelspäne, Holzpartikel, gegebenenfalls zerkleinertes Getreidestroh, Schäben, Baumwollstängel oder deren Gemische, bevorzugt Sägespäne, Hobelspäne, Holzspäne, Holzpartikel, Schäben oder deren Gemische, besonders bevorzugt Sägespäne, Hobelspäne, Holzspäne, Holzpartikel oder deren Gemische.

Die Dimensionen der zerkleinerten lignocellulosehaltigen Stoffe sind nicht kritisch und richten sich nach dem herzustellenden Lignocellulosewerkstoff.

Große Späne, die zum Beispiel für die Herstellung von OSB-Platten verwendet werden heißen auch Strands. Die mittlere Größe der Partikel zur Herstellung von OSB-Platten, Strands, beträgt in der Regel 20 bis 300 mm, bevorzugt 25 bis 200 mm, besonders bevorzugt 30 bis 150 mm.

Für die Herstellung von Spanplatten werden in der Regel kleiner Späne verwendet. Die dafür benötigten Partikel können mittels Siebanalyse der Größe nach klassifiziert werden. Die Siebanalyse wird zum Beispiel in der DIN 4188 oder der DIN ISO 3310 beschrieben. Die mittlere Größe der Partikel beträgt in der Regel 0,01 bis 30 mm, bevorzugt 0,05 bis 25 mm, besonders bevorzugt 0,1 bis 20 mm.

Als Fasern eignen sich Holzfasern, Cellulosefasern, Hanffasern, Baumwollfasern, Bambusfasern, Miscanthus, Bagasse oder deren Gemische, bevorzugt Holzfasern, Hanffasern, Bambusfasern, Miscanthus, Bagasse oder deren Gemische, besonders bevorzugt Holzfasern, Bambusfasern oder deren Gemische. Die Länge der Fasern beträgt in der Regel 0,01 bis 20 mm, bevorzugt 0,05 bis 15 mm, besonders bevorzugt 0,1 bis 10 mm.

Die Partikel oder Fasern liegen in der Regel auch sortenrein, d.h. wenn nur eine der zuvor genannten Sorten (z.B. Späne, Holzspäne bzw. Holzfasern) eingesetzt werden, als Gemische vor, deren einzelne Teile, Partikel oder Fasern sich in Größe und Gestalt unterscheiden.

Die Aufbereitung zu den gewünschten lignocellulosehaltigen Stoffen kann nach an sich bekannten Verfahren erfolgen (siehe zum Beispiel: M. Dunky, P. Niemz, Holzwerkstoffe und Leime, Seite 91 bis 156, Springer Verlag Heidelberg, 2002).

Die lignocellulosehaltigen Stoffe können nach üblichen, dem Fachmann bekannten Methoden der Trocknung mit den danach üblichen geringen Mengen Wasser (in einer üblichen geringen Schwankungsbreite; sog. "Restfeuchte") erhalten werden; dieses Wasser ist bei den Gewichtsangaben der vorliegenden Erfindung nicht berücksichtigt.

Die mittlere Dichte der erfindungsgemäßen lignocellulosehaltige Stoffe ist beliebig und lediglich vom eingesetzten lignocellulosehaltigen Stoff abhängig und liegt in der Regel bei 0,2 bis 0,9 g/cm³, bevorzugt bei 0,4 bis 0,85 g/cm³, besonders bevorzugt bei 0,4 bis 0,75 g/cm³, insbesondere bei 0,4 bis 0,6 g/cm³.

Bei einer mittleren Dichte im Bereich von 601 bis 1200 kg/m³, bevorzugt 601 bis 850 kg/m³, besonders bevorzugt 601 bis 800 kg/m³, werden diese als höherdichte, bei einer mittleren Dichte im Bereich von 200 bis 600 kg/m³, bevorzugt 300 bis 600 kg/m³, besonders bevorzugt 350 bis 600 kg/m³ als niedrigdichte lignocellulosehaltige Stoffe bezeichnet. Bei Faserplatten unterscheidet man zwischen hochdichten Faserplatten (HDF) mit einer Dichte ≥800 kg/m³, mitteldichten Faserplatten (MDF) mit einer Dichte zwischen 650 und 800 kg/m³ und leichten Faserplatten (LDF) mit einer Dichte ≤ 650 kg/m³.

### Komponente B

Komponente B) sind expandierte Kunststoffteilchen, welche vor, während oder nach der Expansion mit mindestens einem Bindemittel beschichtet sind.

Expandierte Kunststoffteilchen, vorzugsweise expandierte thermoplastische Kunststoffteilchen, werden aus expandierbaren Kunststoffteilchen, vorzugsweise expandierbaren thermoplastische Kunststoffteilchen, hergestellt. Beide basieren auf bzw. bestehen aus Polymeren, vorzugsweise thermoplastischen Polymeren, die sich verschäumen lassen. Diese sind dem Fachmann bekannt.

Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, C₂-C₁₀-Olefinhomopolymere, C₂-C₁₀-Olefincopolymere, Polyester oder deren Gemische, bevorzugt PVC (hart und weich), Polyurethane, Styrolhomopolymerisat, Styrolcopolymerisat oder deren Gemische, besonders bevorzugt Styrolhomopolymerisat, Styrolcopolymerisat oder deren Gemische, insbesondere Styrolhomopolymerisat, Styrolcopolymerisat oder deren Gemische.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5,112,875 beschrieben auf das hierin ausdrücklich Bezug genommen wird.

Wie beschrieben, können auch Styrolcopolymerisate eingesetzt werden. Vorteilhaft weisen diese Styrolcopolymerisate mindestens 50 Gew.-%, vorzugsweise mindestens 80 Gew.-% einpolymerisiertes Styrol auf. Als Comonomere kommen z. B. α-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d. h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet.

Auch Mischungen verschiedener Styrol(co)polymerisate können verwendet werden.

Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-α-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Styrolpolymerisate, Styrolcopolymerisate oder Styrolhomopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt.

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Bestehen die expandierten Kunststoffteilchen aus unterschiedlichen Polymertypen, also Polymertypen, denen unterschiedliche Monomere zugrunde liegen, beispielsweise Polystyrol und Polyethylen oder Polystyrol und Homo-Polypropylen oder Polyethylen und Homo-Polypropylen, so können diese in unterschiedlichen Gewichtsverhältnissen vorliegen, die allerdings unkritisch sind.

Die expandierten Kunststoffteilchen werden im Allgemeinen in Form von Kugeln oder Perlen mit einem mittleren Durchmesser von 0,25 bis 10 mm, bevorzugt 0,4 bis 8,5 mm, besonders bevorzugt 0,4 bis 7 mm, insbesondere im Bereich von 1,2 bis 7 mm eingesetzt und weisen vorteilhaft eine kleine Oberfläche pro Volumen auf, beispielsweise in Form eines sphärischen oder elliptischen Partikels.

Die expandierten Kunststoffteilchen sind vorteilhaft geschlossenzellig. Die Offenzelligkeit nach DIN-ISO 4590 beträgt in der Regel weniger als 30 %.

Die expandierten Kunststoffteilchen weisen eine Schüttdichte, von 10 bis 150 kg/m³ auf, bevorzugt 30 bis 100 kg/m³, besonders bevorzugt 40 bis 80 kg/m³, insbesondere 50 bis 70 kg/m³. Die Schüttdichte wird üblicherweise durch Wiegen eines mit dem Schüttgut gefüllten definierten Volumens ermittelt.

Die expandierten Kunststoffteilchen haben in der Regel, wenn überhaupt, nur noch einen geringen Gehalt an Treibmittel. Der Gehalt an Treibmittel im expandierten Kunststoffteilchen liegt im Allgemeinen im Bereich von 0 bis 5,5 Gew.-%, vorzugsweise 0 bis 3 Gew.-%, bevorzugt 0 bis 2,5 Gew.-%, besonders bevorzugt 0 bis 2 Gew.-%, jeweils bezogen auf das expandierte Polystyrol oder expandierte Styrolcopolymerisat. 0 Gew.-% bedeutet hierin, dass kein Treibmittel mit den üblichen Nachweisverfahren nachgewiesen werden kann.

Diese expandierten Kunststoffteilchen können ohne oder mit, bevorzugt ohne weitere Maßnahmen zur Treibmittelverminderung und besonders bevorzugt ohne weitere Zwischenschritte zur Herstellung des lignocellulosehaltigen Stoffs weiterverwendet werden.

Üblicherweise weist das expandierbare Polystyrol oder expandierbare Styrolcopoly-merisat oder das expandierte Polystyrol oder expandierte Styrolcopolymerisat eine antistatische Beschichtung auf.

Die expandierten Kunststoffteilchen können wie folgt erhalten werden:
Kompakte expandierbare Kunststoffteilchen, üblicherweise Feststoffe die in der Regel keine Zellstruktur besitzen, welche ein ausdehnungsfähiges Medium (auch "Treibmittel" genannt) enthalten, werden durch Einwirkung von Wärme oder Druckänderung expandiert (oft auch als "aufschäumen" bezeichnet). Hierbei dehnt sich das Treibmittel aus, die Partikel nehmen an Größe zu und Zellstrukturen entstehen.

Dieses Expandieren wird im Allgemeinen in üblichen Aufschäumvorrichtungen, oft als "Vorschäumer" bezeichnet, durchgeführt. Derartige Vorschäumer können ortsfest installiert oder aber mobil sein.

Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert.

In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert.

Vorzugsweise wird die Expandierung einstufig durchgeführt.

Für die Herstellung von expandiertem Polystyrol als Komponente B) und/oder expandiertem Styrolcopolymerisat als Komponente B) werden im Allgemeinen die expandierbaren Styrolhomopolymerisate oder expandierbaren Styrolcopolymerisate in bekannter Weise durch Erhitzen auf Temperaturen oberhalb ihres Erweichungspunkts, beispielsweise mit Heißluft oder vorzugsweise Dampf und oder Druckänderung expandiert (oft auch als "aufgeschäumt" bezeichnet), wie zum Beispiel in Kunststoff Handbuch 1996, Band 4 "Polystyrol", Hanser 1996, Seiten 640 bis 673 oder US-A-5,112,875 beschrieben. Das expandierbare Polystyrol oder expandierbare Styrolcopolymerisat ist in der Regel in an sich bekannter Weise durch Suspensionspolymerisation oder mittels Extrusionsverfahren wie oben beschrieben erhältlich. Beim Expandieren dehnt sich das Treibmittel aus, die Polymerpartikel nehmen an Größe zu und Zellstrukturen entstehen.
Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation wird Styrol, gegebenenfalls unter Zusatz weiterer Comonomere in wässriger Suspension in Gegenwart eines üblichen Suspensionsstabilisators mittels radikalbildender Katalysatoren polymerisiert. Das Treibmittel und gegebenenfalls weitere Zusatzstoffe können dabei bei der Polymerisation mit vorgelegt werden oder im Laufe der Polymerisation oder nach beendeter Polymerisation dem Ansatz zugefügt werden. Die erhaltenen perlförmigen, mit Treibmittel imprägnierten, expandierbaren Styrolpolymerisate werden nach beendeter Polymerisation von der wässrigen Phase abgetrennt, gewaschen, getrocknet und gesiebt.

Bei dem Extrusionsverfahren wird das Treibmittel beispielsweise über einen Extruder in das Polymer eingemischt, durch eine Düsenplatte gefördert und unter Druck zu Partikeln oder Strängen granuliert.

Die so erhaltenen expandierten Kunststoffteilchen bzw. die beschichteten expandierten Kunststoffteilchen können zwischengelagert und transportiert werden.

Als Treibmittel eignen sich alle dem Fachmann bekannten Treibmittel, beispielsweise aliphatische C₃- bis C₁₀-Kohlenwasserstoffe wie Propan, n-Butan, Isobutan, n-Pentan, Isopentan, Neopentan cyclo-Pentan und/oder Hexan und dessen Isomere, Alkohole, Ketone, Ester, Ether, halogenierte Kohlenwasserstoffe oder deren Gemische, bevorzugt n-Pentan, Isopentan, Neopentan, Cyclopentan oder deren Gemisch, besonders bevorzugt handelsübliche Pentanisomerengemische aus n-Pentan und iso-Pentan.

Der Gehalt an Treibmittel im expandierbaren Kunststoffteilchen liegt im allgemeinen im Bereich von 0,01 bis 7 Gew.-%, vorzugsweise 0,01 bis 4 Gew.-%, bevorzugt 0,1 bis 4 Gew.-%, besonders bevorzugt 0,5 bis 3,5 Gew.-%, jeweils bezogen auf das treibmittelhaltige expandierbare Polystyrol oder Styrolcopolymerisat.

### Beschichtung der Komponente B

Als Beschichtungsmittel für die expandierbaren bzw. expandierten Kunststoffteilchen eignen sich alle Verbindungen der Komponente C sowie Verbindungen K, die eine klebrige Schicht bilden, oder deren Gemische, bevorzugt alle Verbindungen der Komponente C sowie Verbindungen K, die eine klebrige Schicht bilden, besonders bevorzugt alle Verbindungen der Komponente C. Für den Fall, dass das Beschichtungsmittel aus den Komponenten C ausgewählt wurde, können Beschichtungsmittel und Komponente C im Lignocellulosewerkstoff gleich oder verschieden, bevorzugt gleich sein.

Als Verbindungen K, die eine klebrige Schicht bilden, eignen sich Polymere auf Basis von Monomeren wie vinylaromatischen Monomeren, wie α-Methylstyrol, p-Methylstyrol, Ethylstyrol, tert.- Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, α-β-ungesättigte Carbonsäuren, wie Acrylsäure und Methacrylsäure, deren Estern, insbesondere Alkylester, wie C₁- bis C-₁₀-Alkylester der Acrylsaeure, insbesondere die Butylester, vorzugsweise n-Butylacrylat, und die C₁- bis C₁₀-Alkylester der Methacrylsäure, insbesondere Methylmethacrylat (MMA), oder Carbonsäureamide, beispielsweise Acrylsäureamid und Methacrylsäureamid. Diese Polymere können gegebenenfalls 1 bis 5 Gew.- % Comonomere, wie (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, MethyIolacrylamid oder das Natriumsalz der Vinylsulfonsäure enthalten. Bevorzugt sind diese Polymere aus einem oder mehreren der Monomeren Styrol, Butadien, Acrylsäure, Methacrylsäure, C₁- bis C₄-Alkylacrylaten, C₁- bis C₄-Alkylmethacrylaten, Acrylsäureamid, Methacrylsäureamid und Methylolacrylsäureamid aufgebaut. Des Weiteren eignen sich insbesondere Acrylatharze, besonders bevorzugt in Form der wässrigen Polymerdispersion, sowie Homooligomere oder Homopolymere von α-β-ungesättigten Carbonsäuren oder deren Anhydriden sowie Co-Oligo-mere oder Co-Polymere von α-β-ungesättigten Carbonsäuren und/oder deren Anhydriden mit ethylenisch ungesättigten Co-Monomeren.

Geeignete Polymerdispersionen sind beispielsweise durch radikalische Emulsionspolymerisation von ethylenisch ungesättigten Monomeren, wie Styrol, Acylate, Methacrylate oder deren Gemisch, wie in WO-A-00/50480 beschrieben, erhältlich, bevorzugt reine Acrylate oder Styrol-Acrylate, welche aus den Monomeren Styrol, n-Butylacrylat, Methylmetharcylat (MMA), Methacrylsaeure, Acrylamid oder Methylolacrylamid, aufgebaut sind.

Die Herstellung der Polymerdispersion oder -suspension kann in an sich bekannter Weise, etwa durch Emulsions-, Suspensions-, oder Dispersionspolymerisation, bevorzugt in wässriger Phase, erfolgen. Man kann das Polymer auch durch Lösungs- oder Massepolymerisation herstellen, gegebenenfalls Zerteilen und die Polymerpartikel anschließend in Wasser in üblicher Weise dispergieren.

Das Beschichtungsmittel kann mit dem expandierbaren Kunststoffteilchen (also vor der Expansion, "Variante I") oder bei der Expandierung der expandierbaren Kunststoffteilchen (also während der Expansion, "Variante II") oder mit dem expandierten Kunststoffteilchen in Berührung gebracht (also nach der Expansion, "Variante III"); vorzugsweise wird Variante (III) verwendet.

Der erfindungsgemäße beschichtete Kunststoffteilchen können beispielsweise dadurch hergestellt werden, dass man
a) Kunststoffteilchen, bevorzugt nicht expandierbare Kunststoffteilchen, aufschmilzt, ein oder mehreren Beschichtungsmitteln und Treibmittel in beliebiger Reihenfolge zugibt, möglichst homogen vermischt und zu Schaumstoffpartikeln aufschäumt,
b) expandierbare Kunststoffteilchen, mit ein oder mehreren Beschichtungsmitteln beschichtet und zu Schaumstoffpartikeln aufschäumt oder
c) expandierbare Kunststoffteilchen während oder nach dem Vorschäumen mit ein oder mehreren Beschichtungsmitteln beschichtet.

Weiterhin kann das in Berührung bringen mit den üblichen Verfahren geschehen, beispielsweise durch Besprühen, Tauchen, Benetzen oder Auftrommeln der expandierbaren bzw. expandierten Kunststoffteilchen mit dem Beschichtungsmittel bei einer Temperatur von 0 bis150°C, bevorzugt 10 bis 120°C, besonders bevorzugt 15 bis 110°C und einem Druck von 0,01 bis 10 bar, bevorzugt 0,1 bis 5 bar, besonders bevorzugt bei Normaldruck (Atmosphärendruck); bevorzugt wird das Beschichtungsmittel im sogenannten Vorschäumer unter den zuvor genannten Bedingungen zugesetzt.

### Komponente C

Als Bindemittel eignen sich Harze wie Phenolformaldehydharze, Aminoplastharze, organische Isoyanate mit mindestens 2 Isocyanatgruppen oder deren Gemische. Die Harze können für sich alleine, als einziger Harzbestandteil oder Kombination aus zwei oder mehreren Harzbestandteilen der unterschiedlichen Harze der Gruppe Phenolformaldehydharze, Aminoplastharze und organische Isoyanate mit mindestens 2 Isocyanatgruppen eingesetzt werden.

### Phenolformaldehydharze

Phenolformaldehydharze (auch PF-Harze genannt) sind dem Fachmann bekannt, siehe zum Beispiel Kunststoff-Handbuch, 2. Auflage, Hanser 1988, Band 10 "Duroplaste", Seiten 12 bis 40.

### Aminoplastharze

Als Aminoplastharze können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben und können durch Umsetzen der Carbamidgruppen-haltigen Verbindungen, vorzugsweise Harnstoff, Melamin oder deren Gemischen, mit den Aldehyden, vorzugsweise Formaldehyd, in den gewünschten Molverhältnissen Carbamidgruppe zum Aldehyd, vorzugsweise in Wasser als Lösungsmittel, hergestellt werden.

Das Einstellen des gewünschten molaren Verhältnisses Aldehyd, vorzugsweise Formaldehyd zum gegebenenfalls teilweise mit organischen Resten substituierten Amino-Gruppe kann auch durch Zusatz von -NH₂-Gruppen-tragenden Monomeren zu formaldehydreicheren fertigen, vorzugsweise kommerziellen, Aminoplastharzen erfolgen. NH₂-Gruppen-tragende Monomere sind vorzugsweise Harnstoff, Melamin oder deren Gemische, besonders bevorzugt Harnstoff.

Als Aminoplastharze werden bevorzugt Polykondensationsprodukte aus Verbindungen mit mindestens einer, gegebenenfalls teilweise mit organischen Resten substituierten, Carbamidgruppe (die Carbamidgruppe wird auch als Carboxamidgruppe bezeichnet) und einem Aldehyd, vorzugsweise Formaldehyd, verstanden; besonders bevorzugt Harnstoff-Formaldehydharze (UF-Harze), Melamin-Formaldehydharze (MF-Harze) oder melaminhaltige Harnstoff-Formaldehydharze (MUF-Harze), insbesondere Harnstoff-Formaldehydharze, beispielsweise Kaurit^{®} Leim-Typen der Firma BASF SE. Weiterhin ganz bevorzugte Aminoplastharze sind Polykondensationsprodukte aus Verbindungen mit mindestens einer, auch teilweise mit organischen Resten substituierten, Aminogruppe und Aldehyd, worin das molare Verhältnis Aldehyd zum gegebenenfalls teilweise mit organischen Resten substituierten Amino-Gruppe im Bereich von 0,3:1 bis 1:1, bevorzugt 0,3:1 bis 0,6:1, besonders bevorzugt 0,3:1 bis 0,45:1, ganz besonders bevorzugt 0,3:1 bis 0,4:1 liegt.

Die genannten Aminoplastharze werden üblicherweise in flüssiger Form, meist in einem flüssigen Medium suspendiert, vorzugsweise in wässriger Suspension oder aber auch als Feststoff eingesetzt.

Der Feststoffgehalt der Aminoplastharz-Suspensionen, vorzugsweise der wässrigen Suspension, liegt üblicherweise bei 25 bis 90 Gew.-%, vorzugsweise bei 50 bis 70 Gew.-%.

Der Feststoffgehalt des Aminoplast-Harzes in wässriger Suspension kann nach Günter Zeppenfeld, Dirk Grunwald, Klebstoffe in der Holz- und Möbelindustrie, 2. Auflage, DRW-Verlag, Seite 268 bestimmt werden. Zur Bestimmung des Feststoffgehalts von Aminoplast-Leimen wird 1 g Aminoplast-Leim in eine Wägeschale genau eingewogen, am Boden fein verteilt und 2 Stunden bei 120°C in einem Trockenschrank getrocknet. Nach Temperierung auf Raumtemperatur in einem Exsikkator wird der Rückstand gewogen und als prozentualer Anteil der Einwaage berechnet.

Die Gewichtsangabe des Bindemittels bezieht sich im Hinblick auf die Aminoplastkomponente im Bindemittel auf den Feststoffgehalt der entsprechenden Komponente (bestimmt durch Verdunsten des Wassers bei 120°C, innerhalb von 2 h nach Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI, auf die Isocyanatkomponente an sich, also zum Beispiel ohne Lösungsmittel oder Emulgiermedium.

### Organische Isocyanate

Als organische Isocyanate eignen sich organische Isocyanate mit mindestens zwei Isocyanatgruppen oder deren Gemische, insbesondere alle dem Fachmann, vorzugsweise die für die Herstellung von Holzwerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische, besonders bevorzugt das oligomere organische Isocyanat PMDI ("Polymeres Methylendiphenylendüsocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), ganz besonders bevorzugt Produkte der LUPRANAT^{®}-Typenreihe der BASF SE, insbesondere LUPRANAT^{®} M 20 FB der BASF SE.

### Härter in der Komponente C

Das Bindemittel C) kann dem Fachmann bekannte Härter oder deren Gemische enthalten.

Als Härter eignen sich alle chemischen Verbindungen jeglichen Molekulargewichts, die die Polykondensation von Aminoplastharz oder Phenolformaldehydharz bewirken oder beschleunigen und solche, welche die Reaktion von organischem Isocyanat mit mindestens zwei Isocyanatgruppen mit Wasser oder anderen Verbindungen oder Substraten (zum Beispiel Holz), welche-OH oder -NH-, -NH₂- oder =NH-Gruppen enthalten, bewirken oder beschleunigen.

Als Härter für Aminoplastharze oder Phenolformaldehydharze eignen sich solche, die die Weiterkondensation katalysieren wie Säuren oder deren Salze oder wässrige Lösungen dieser Salze.

Als Säuren eignen sich anorganische Säuren wie HCl, HBr, Hl, H₂SO₃, H₂SO₄, Phosphorsäure, Polyphosphorsäure, Salpetersäure, Sulfonsäuren, beispielsweise p-Toluolsulfonsäure, Methansulfonsäure, Trifluormethansulfonsäure, Nonafluorbutansulfonsäure, Carbonsäuren wie C₁- bis Cs-Carbonsäuren beispielsweise Ameisensäure, Essigsäure, Propionsäure oder deren Gemische, bevorzugt anorganische Säuren wie HCl, H₂SO₃, H₂SO₄, Phosphorsäure, Polyphosphorsäure, Salpetersäure, Sulfonsäuren wie p-Toluolsulfonsäure, Methansulfonsäure, Carbonsäuren wie C₁- bis C₈-Carbonsäuren beispielsweise Ameisensäure, Essigsäure, besonders bevorzugt anorganische Säuren wie H₂SO₄, Phosphorsäure, Salpetersäure, Sulfonsäuren wie p-Toluolsulfonsäure, Methansulfonsäure, Carbonsäuren wie Ameisensäure, Essigsäure.

Als Salze eignen sich Halogenide, Sulfite, Sulfate, Hydrogensulfate, Carbonate, Hydrogencarbonate, Nitrite, Nitrate, Sulfonate, Salze von Carbonsäuren wie Formiate, Acetate, Propionate, bevorzugt Sulfite, Carbonate, Nitrate, Sulfonate, Salze von Carbonsäuren wie Formiate, Acetate, Propionate, besonders bevorzugt Sulfite, Nitrate, Sulfonate, Salze von Carbonsäuren wie Formiate, Acetate, Propionate, von protonierten, primären, sekundären und tertiären aliphatischen Aminen, Alkanolaminen, cyclischen, aromatischen Aminen wie C₁- bis C₈-Amine, Isopropylamin, 2-Ethylhexylamin, Di-(2-ethylhexyl)amin, Diethylamin, Dipropylamin, Dibutylamin, Diisopropylamin, tert-Butylamin, Triethylamin, Tripropylamin, Triisopropylamin, Tributylamin, Monoethanolamin, Morpholin, Piperidin, Pyridin, sowie Ammoniak, bevorzugt protonierte primäre, sekundäre, und tertiäre aliphatische Amine, Alkanolamine, cyclische Amine, cyclische aromatische Amine sowie Ammoniak, besonders bevorzugt protonierte Alkanolamine, cyclische Amine sowie Ammoniak oder deren Gemische.

Als Salze seien insbesondere genannt: Ammoniumchlorid, Ammoniumbromid, Ammoniumiodid, Ammoniumsulfat, Ammoniumsulfit, Ammoniumhydrogensulfat, Ammoniummethansulfonat, Ammonium-p-Toluolsulfonat, Ammoniumtrifluormethansulfonat, Ammoniumnonafluorbutansulfonat, Ammoniumphosphat, Ammoniumnitrat, Ammoniumformiat, Ammoniumacetat, Morpholiniumchlorid, Morpholiniumbromid, Morpholiniumiodid, Morpholiniumsulfat, Morpholiniumsulfit, Morpholiniumhydrogensulfat, Morpholiniummethansulfonat, Morpholinium-p-Toluolsulfonat, Morpholiniumtrifluormethansulfonat, Morpholiniumnonafluorbutansulfonat, Morpholiniumphosphat, Morpholiniumnitrat, Morpholiniumformiat, Morpholiniumacetat, Monoethanolammoniumchlorid, Monoethanolammoniumbromid, Monoethanolammoniumiodid, Monoethanolammoniumsulfat, Monoethanolammoniumsulfit, Monoethanolammoniumhydrogensulfat, Monoethanolammoniummethansulfonat, Monoethanolammonium-p-Toluolsulfonat, Monoethanolammoniumtrifluormethansulfonat, Monoethanolammoniumnonafluorbutansulfonat, Monoethanolammoniumphosphat, Monoethanolammoniumnitrat, Monoethanolammoniumformiat, Monoethanolammoniumacetat oder deren Gemische.

Ganz besonders bevorzugt werden die Salze in Form ihrer wässrigen Lösungen eingesetzt. Als wässrige Lösungen werden in diesem Zusammenhang verdünnte, gesättigte, übersättigte und auch teilgefällte Lösungen sowie gesättigte Lösungen mit einem Feststoffgehalt an nicht mehr lösbarem Salz verstanden.

Phenolformaldehydharze können auch alkalisch, bevorzugt mit Carbonaten oder Hydroxide wie Kaliumcarbonat und Natriumhydroxid ausgehärtet werden.

Gut geeignete Härter für organisches Isocyanat mit mindestens zwei Isocyanatgruppen, beispielsweise PMDI, können in vier Gruppen unterteilt werden: Amine, weitere Basen, Metallsalze und Organometallverbindungen, bevorzugt sind Amine. Derartige Härter sind beispielsweise in Michael Szycher, Szycher's Handbook of Polyurethanes, CRC Press, 1999, Seiten 10-1 bis 10-20 beschrieben.

Ferner geeignet sind Verbindungen, die die Reaktion von reaktiven Wasserstoffatomen, insbesondere Hydroxylgruppen, enthaltenden Verbindungen mit den organischen Isocyanaten stark beschleunigen.

Zweckmäßigerweise verwendet man als Härter basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylamino-propyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexan-diamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, und Triethylendiamin.

Als Organometallverbindungen eignen sich Organometallsalze wie Eisen(II)-chlorid, Zinkchlorid, Bleioctoat und vorzugsweise Zinnsalze, wie Zinndioctoat, Zinndiethylhexoat und Dibutylzinn-dilaurat sowie insbesondere Mischungen aus tertiären Aminen und organischen Zinnsalzen.

Als weitere Basen eignen sich Amidine, wie 2,3-Dimethyl-3,4,5,6-tetrahydropyrimidin, Tetraalkyl-ammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Weitere Beispiele von Härtern für Aminoplastharze finden sich in M. Dunky, P. Niemz, Holzwerkstoffe und Leime, Springer 2002, Seiten 265 bis 269, solche Härter für Phenolformaldehydharze finden sich in M. Dunky, P. Niemz, Holzwerkstoffe und Leime, Springer 2002, Seiten 341 bis 352 und solche Härter für organische Isocyanate mit mindestens 2 Isocyanatgruppen finden sich in M. Dunky, P. Niemz, Holzwerkstoffe und Leime, Springer 2002, Seiten 385 bis 391.

### Komponente D)

Die erfindungsgemäßen Lignocellulosewerkstoffen können dem Fachmann bekannte und handelsübliche Additive als Komponente D in Mengen von 0 bis 68 Gew.-%, bevorzugt 0 bis 10 Gew.-%, besonders bevorzugt 0,5 bis 8 Gew.-%, insbesondere 1 bis 3 Gew.-% enthalten.

Als Additive eignen sich beispielsweise Hydrophobierungsmittel wie Paraffin-Emulsionen, Pilzschutzmittel, Formaldehydfänger, wie Harnstoff oder Polyamine, und Flammschutzmittel, Streckmittel, Füllmittel. Weitere Beispiele von Additiven finden sich in M. Dunky, P. Niemz, Holzwerkstoffe und Leime, Springer 2002, Seiten 436 bis 444.

### Mengen der Komponenten im Lignocellulosewerkstoff

Die Gesamtmenge des Beschichtungsmittels auf den expandierten Kunststoffteilchen B) {bezogen auf die Menge der nicht beschichteten Kunststoffteilchen} liegt im Bereich von 0,01 bis 20 Gew.-%, bevorzugt 0,05 bis 15 Gew.-%, besonders bevorzugt 0,1 bis 10 Gew.-%.

Die beschichteten, expandierten Kunststoffteilchen B) liegen in der Regel auch nach dem Verpressen zum Lignocellulosewerkstoff, vorzugsweise Holzwerkstoff, vorzugsweise mehrschichtigen Lignocellulosewerkstoff, besonders bevorzugt mehrschichtigen Holzwerkstoff, in einem praktisch ungeschmolzenen Zustand vor. Das bedeutet, dass die Kunststoffteilchen B) in der Regel nicht in die Lignocellulose-Teilchen eingedrungen sind oder diese imprägniert haben, sondern zwischen den Lignocellulose-Teilchen verteilt sind. Üblicherweise lassen sich die Kunststoffteilchen B) mit physikalischen Verfahren, zum Beispiel nach dem Zerkleinern des Lignocellulosewerkstoffs, von der Lignocellulose abtrennen.

Die Gesamtmenge der beschichteten, expandierten Kunststoffteilchen B), bezogen auf den lignocellulosehaltigen, vorzugsweise holzhaltigen Stoff, liegt im Bereich von 1 bis 25 Gew.-%, vorzugsweise 3 bis 20 Gew.-%, besonders bevorzugt 5 bis 15 Gew.-%.

Die Gesamtmenge des Bindemittels C), bezogen auf die Lignocellulose Stoffe, liegt in der Regel im Bereich von 1 bis 50 Gew.-%, bevorzugt 2 bis 15 Gew.-%, besonders bevorzugt 3 bis 10 Gew.-%, wobei die Menge
a) des Phenolformaldehydharzes bezogen auf die Lignocellulose Stoffe in der Regel im Bereich von 0 bis 50 Gew.-%, bevorzugt 4 bis 20 Gew.-%, besonders bevorzugt 5 bis 15 Gew.-%,
b) des Aminoplastharzes (als Feststoff gerechnet bezogen auf die Lignocellulose Stoffe in der Regel im Bereich von 0 bis 45 Gew.-%, bevorzugt 4 bis 20 Gew.-%, besonders bevorzugt 5 bis 15 Gew.-% und
c) des organischen Isocyanats bezogen auf die Lignocellulose Stoffe in der Regel im Bereich von 0 bis 7 Gew.-%, vorzugsweise 0,1 bis 5 Gew.-%, besonders bevorzugt 0,5 bis 4 Gew.-% liegt.

### Mehrschichtverfahren

Die vorliegende Erfindung betrifft weiterhin ein Verfahren zur Herstellung eines mehrschichtigen Lignocellulosewerkstoffes der mindestens drei Schichten enthält, wobei entweder nur die mittlere Schicht oder mindestens ein Teil der mittleren Schichten einen lignocellulosehaltigen Stoff wie oben definiert enthält oder außer der mittleren Schicht oder mindestens einem Teil der mittleren Schichten mindestens eine weitere Schicht einen lignocellulosehaltigen Stoff wie oben definiert enthält, wobei man die Komponenten für die einzelnen Schichten übereinanderschichtet und unter erhöhter Temperatur und erhöhtem Druck verpreßt.

Die mittlere Dichte des erfindungsgemäßen mehrschichtigen, vorzugsweise des erfindungsgemäßen dreischichtigen, Lignocellulosewerkstoffs, vorzugsweise Holzwerkstoffs ist in der Regel nicht kritisch.

Üblicherweise haben höherdichte erfindungsgemäße mehrschichtige, vorzugsweise erfindungsgemäße dreischichtige, Lignocellulosewerkstoffe, vorzugsweise Holzwerkstoffe eine mittlere Dichte im Bereich von mindestens 600 bis 900 kg/m³, bevorzugt 600 bis 850 kg/m³, besonders bevorzugt 600 bis 800 kg/m³.

Üblicherweise haben niedrigdichte erfindungsgemäße mehrschichtige, vorzugsweise erfindungsgemäße dreischichtige, Lignocellulosewerkstoffe, vorzugsweise Holzwerkstoffe eine mittlere Dichte im Bereich von 200 bis 600 kg/m³, bevorzugt 300 bis 600 kg/m³, besonders bevorzugt 350 bis 500 kg/m³.

Bevorzugte Parameterbereiche sowie bevorzugte Ausführungsformen im Hinblick auf die mittlere Dichte des lignocellulosehaltigen, vorzugsweise holzhaltigen Stoffs und im Hinblick auf die Komponenten sowie deren Herstellungsverfahren A), B) ,C) und D) sowie die Kombination der Merkmale entsprechen den oben beschriebenen.

Mittlere Schichten im Sinne der Erfindung sind alle Schichten, die nicht die äußeren Schichten sind.

In einer bevorzugten Ausführungsform enthalten die äußeren Schichten (üblicherweise "Deckschicht(en)" genannt) keine expandierten Kunststoffteilchen B).

Bevorzugt enthält der erfindungsgemäße mehrschichtige Lignocellulosewerkstoff, vorzugsweise mehrschichtige Holzwerkstoff drei Lignocelluloseschichten, vorzugsweise Holzstoffschichten, wobei die äußeren Deckschichten in Summe in der Regel dünner sind als die innere(n) Schicht(en).

Das für die äußeren Schichten verwendete Bindemittel ist üblicherweise ein Amino-plastharz, beispielsweise Harnstoff-Formaldehydharz (UF), Melamin-Formaldehydharz (MF), Melamin-Harnstoff-Formaldehydharz (MUF) oder das erfindungsgemäße Bindemittel C). Vorzugsweise ist das für die äußeren Schichten verwendete Bindemittel ein Aminoplastharz, besonders bevorzugt ein Harnstoff-Formaldehydharz, ganz besonders bevorzugt ein Aminoplastharz worin das molare Formaldehyd zu -NH₂-Gruppen-Verhältnis im Bereich von 0,3:1 bis 3:1 liegt.

Die Dicke des erfindungsgemäßen mehrschichtigen Lignocellulosewerkstoffs, vorzugsweise mehrschichtigen Holzwerkstoffs variiert mit dem Anwendungsgebiet und liegt in der Regel im Bereich von 0,5 bis 100 mm, vorzugsweise im Bereich von 10 bis 40 mm, insbesondere 12 bis 40 mm.

Die Verfahren zur Herstellung von mehrschichtigen Holzwerkstoffen sind im Prinzip bekannt und zum Beispiel in M. Dunky, P. Niemz, Holzwerkstoffe und Leime, Springer 2002, Seiten 91 bis 150 beschrieben.

Ein Beispiel für ein Verfahren zur Herstellung eines erfindungsgemäßen mehrschichtigen Holzwerkstoffs wird im Folgenden beschrieben.

Zunächst wird Komponente B aus expandierbaren Kunststoffteilchen aufgeschäumt und mit Beschichtungsmittel beschichtet.

Das treibmittelhaltige expandierbare Kunststoffgranulat wurde in einem handelsüblichen EPS-Druckvorschäumer (Firma Erlenbach) mit einem Volumen von 180 Liter (ca. 50 cm im Durchmesser und ca. 100 cm in der Höhe) zu Schaumstoffperlen vorgeschäumt (Füllmenge Kaurit-Light-200-Granulat 2000 g). Während des Vorschäumens wurden die Beschichtungsmittel in 27 Gew.-% Lösung (gelöst in Wasser) in den Druckvorschäumer eingespritzt.

Die somit erhaltene beschichtete Komponente B) kann nun direkt oder nach Lagerung weiter eingesetzt werden.

Nach der Zerspanung des Holzes werden die Späne getrocknet. Danach werden gegebenenfalls Grob- und Feinanteile entfernt. Die verbleibenden Späne werden durch Sieben oder Sichten im Luftstrom sortiert. Das gröbere Material wird für die Mittelschicht, das feinere für die Deckschichten eingesetzt.

Die Deckschichtspäne werden getrennt von den Mittelschichtspänen mit Komponente C), Härter, bevorzugt werden diese Härter kurz vor der Verwendung der Komponente C zugesetzt, und gegebenenfalls Komponente D beleimt, beziehungsweise vermischt. Diese Mischung wird nachfolgend als Deckschichtmaterial bezeichnet.

Die Mittelschichtspäne werden getrennt von den Deckschichtspänen mit der beschichteten Komponente B), Komponente C, Härter, bevorzugt werden diese Härter kurz vor der Verwendung der Komponente C zugesetzt, und gegebenenfalls Komponente D beleimt, beziehungsweise vermischt. Diese Mischung wird anschließend als Mittelschichtmaterial bezeichnet.

Anschließend werden die Späne gestreut.

Zunächst wird das Deckschichtmaterial auf das Formband gestreut, anschließend das Mittelschichtmaterial - enthaltend die beschichtete Komponenten B), C) und gegebenenfalls D) - und schließlich noch einmal Deckschichtmaterial. Das Deckschichtmaterial wird dabei so geteilt, dass beide Deckschichten in etwa gleich viel Material enthalten. Der so erzeugte dreischichtige Spänekuchen wird kalt (in der Regel bei Raumtemperatur) vorverdichtet und anschließend heiß gepresst.

Das Verpressen kann nach allen dem Fachmann bekannten Verfahren erfolgen. Üblicherweise wird der Holzpartikelkuchen bei einer Press-Temperatur von 150 bis 230°C auf die gewünschte Dicke gepresst. Die Pressdauer beträgt normalerweise 3 bis 15 Sekunden pro mm Plattendicke. Man erhält eine dreischichtige Spanplatte.

Die mechanische Festigkeit kann durch die Messung der Querzugsfestigkeit nach EN 319 bestimmt werden.

Die Beschichtung der Komponente B) bewirkt, dass die Migration der einzelnen Kunststoffteilchen an die Oberfläche reduziert, unterdrückt bzw. verhindert sowie die Gesamtmenge an Bindemittel im erfindungsgemäßen Lignocellulosewerkstoff reduziert wird.

Lignocellulosewerkstoffe, insbesondere mehrschichtige Holzwerkstoffe, sind eine kostengünstige und Ressourcen schonende Alternative zu Massivholz und haben große Bedeutung und werden verwendet zur Herstellung von Gegenständen aller Art und im Baubereich, insbesondere zur Herstellung von Möbeln und Möbelteilen (im Möbelbau), von Verpackungsmaterialien, von Laminatfußböden und als Baumaterialien, im Hausbau oder im Innenausbau oder in Kraftfahrzeugen.

Die expandierbaren oder expandierten Kunststoffteilchen eignen sich zur Herstellung lignocellulosehaltiger Formkörper (Verwendung).

### Beispiele

### Herstellung der Leimflotte

Eine 67 Gew.-%ige wässrige Lösung von Kaurit® Leim 347 flüssig der Firma BASF SE (Technisches Merkblatt, M 6167 d, Februar 2008, BASF SE) im Molverhältnis von Formaldehyd zu Harnstoff von 1,09:1 wurde mit 0,4 Gew.-% einer 52 Gew.-%igen wässrigen Ammoniumnitratlösung und 14 Gew.-% Wasser versetzt.

### Plattenherstellung

950 g oben hergestellten Leimlösung werden mit 5,4 kg Holzspänen vermischt, so dass eine Beleimung von 10% atro (atro = Festharz auf trockenes Holz) resultiert.

Zunächst wurde aus den beleimten Holzspänen ein Spänekuchen der Größe 500 x 500 mm und der Höhe 150 mm gestreut. Anschließend eine der in Tabelle 1 aufgelisteten Kunststofffolien auf den Spänekuchen gelegt und weitere Späne auf die Folie gestreut, bis die Gesamthöhe des Spänekuchens 200 mm betrugt.

Die beleimten Holzspäne mit der innenliegenden Kunststofffolie werden in einer Heißpresse bei 210°C und über 180 Sekunden zu einer 19 mm dicken Holzspanplatte gepresst, wobei der Pressdruck nach 60 Sekunden von anfänglich 40 auf 20 bar und nach weiteren 60 Sekunden auf 10 bar reduziert wird. Nach Abkühlung auf Raumtemperatur und Lagerung über mindestens 24 Stunden werden die so erhaltenen Holzspanplatten untersucht.

### Analytik und Versuchsergebnisse

An den Laborplatten wurde gemäß EN 312 die Querzugfestigkeit an erfindungsgemäßen Beispielen (Nr. 1 und 2) sowie an Vergleichsbeispielen (A, B, C, D, E, F und G) bestimmt.

| Beispiel | Verwendete Dampfsperre | Dicke der Dampfsperre [mm] | Querzug gemäß EN 312 [N/mm²] |
|---|---|---|---|
| 1 | Folie F1 (s.u.) | 0,03 | 0,67 |
| A | Aluminiumfolie | 0,3 | Aluminiumfolie wird während des Pressvorgangs zerstört, so dass die Dampfsperrwirkung verloren geht und keine Dampfsperre im Werkstoff vorliegt |
| B | Ultramid^{®} B33L, Polyamid 6 | 0,05 | Keine Bestimmung möglich, Delaminerung |
| C | Ultramid® C33L, Polyamid 6, 66 Copolymer | 0,05 | 0,23 |
| 2 | Oppanol® B200 | 2 | 0,46 |
| D | Polystyrol Handelsware OTTOWOLFF Bastlerglas OWOCOR® | 2 | Keine Bestimmung möglich, Delaminerung |
| E | Aluminium Glattblech, blank Handelsware | 1,5 | Keine Bestimmung möglich, Delaminerung |
| F | PVC Handelsware, Guttagliss, Hobbycolor | 3 | Keine Bestimmung möglich, Delaminerung |
| G | Acrylglas Handelsware, Guttacryl | 3 | Keine Bestimmung möglich, Delaminerung |

Folie F1: bestand aus insgesamt sieben Schichten mit folgender Zusammensetzung (alle folgenden Angaben in Gewichts-%, Gesamtanteil an Polyisobutylen ca. 0,5 bis 1 Gew.-%):
- Dowlex® 2045S (80 Gew.-%), Lupolen® 2420F (18,5 Gew.-%), ARX® 901 (1,5 Gew.-%)
- Dowlex® 2045S (70 Gew.-%), Lupolen® 2420F (18,5 Gew.-%), Euthylen® Weiss (10 Gew.-%), ARX® 901 (1,5 Gew.-%)
- Dowlex® 2045S (80 Gew.-%), Lupolen® 2420F (20 Gew.-%)
- Dowlex® 2045S (80 Gew.-%), Lupolen® 2420F (20 Gew.-%)
- Dowlex® 2045S (80 Gew.-%), Lupolen® 2420F (20 Gew.-%)
- Dowlex® 2045S (70 Gew.-%), Lupolen® 2420F (18,5 Gew.-%), Euthylen® Weiss (10 Gew.-%), ARX® 901 (1,5 Gew.-%)
- Dowlex® 2045S (70 Gew.-%), Lupolen® 2420F (18,5 Gew.-%), Polybatch TAC® 100 (10 Gew.-%), ARX® 901 (1,5 Gew.-%)

- Dowlex® 2045S ist ein LLDPE (Linear Low Density Polyethylene) der Firma Dow Chemicals
- Lupolen® 2420F ist ein LDPE (Low Density Polyethylene) der Firma LyondeIIBaseII

- Euthylen® Weiss ist ein Titandioxid der BASF SE
- Polybatch TAC®100 ist ein Masterbatch der Firma A. Schulman und besteht aus 60 Gew.-% Polyisobutlyen und 40 Gew.-% LDPE
- ARX® 901 ist ein UV Stabilisator für Kunststoffe der Firma Argus

Die Folie wurde auf einer 7-Schicht Blasfolienanlage der Firma Collin produziert. Die Extruder B-F hatten einen Innendurchmesser von 30mm und eine Innenlänge von 750mm. Extruder A hatte einen Innendurchmesser von 45mm und eine Innenlänge von 1125mm. Die Blasdüse mit Spiralmantel hatte einen Durchmesser von 180mm. Die Kühlstrecke nach der Düse vor Flachlegung betrug 8.5m.

Bei der Produktion der beschriebenen Folie hatten die Extruder eine Massetemperatur von 215 - 232°C. Die Abzugsgeschwindigkeit betrug 15.5 m/min. Extruder A hatte ca. 5kg Durchsatz in der Stunde, Extruder C ca. 3kg/h und alle anderen Extruder ca. 3.5kg/h.

## Patentansprüche

1. Mehrschichtige Lignocellulosewerkstoffe, bei der mindestens eine Schicht eine Dampfsperrschicht ist und mindestens eine Dampfsperrschicht unterhalb der Oberfläche des Lignocellulosewerkstoffes liegt, und die Lignocellulosewerkstoffschichten
A) 30 bis 98 Gew.-% ein- oder mehrere lignocellulosehaltige Stoffe,
B) 0 bis 25 Gew.-% expandierte Kunststoffteilchen mit der Schüttdichte im Bereich von 10 bis 150 kg/m³,
C) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter, und
D) 0 bis 68 Gew.-% Additive
enthalten, **dadurch gekennzeichnet, dass** die Dampfsperre 0,01 bis 100 Gew.-% Polyisobutylen, 0 bis 99,99 Gew.-% weiterer Polymere und 0 bis 20 Gew.-% Additive enthält.

2. Mehrschichtige Lignocellulosewerkstoffe nach Anspruch 1, **dadurch gekennzeichnet, dass** die mehrschichtigen Lignocellulosewerkstoffe aus mindestens zwei Lignocelluloseschichten mit dazwischenliegender Dampfsperre bestehen.

3. Mehrschichtige Lignocellulosewerkstoffe nach Anspruch 1 oder 2, **dadurch gekennzeichnet, dass** die Dampfsperre eine Folie ist.

4. Mehrschichtige Lignocellulosewerkstoffe nach Anspruch 1 bis 3, **dadurch gekennzeichnet, dass** das Polyisobutylen in der Dampfsperre ein Molekulargewicht von 5.000 bis 10.000.000 g/mol besitzt.

5. Mehrschichtige Lignocellulosewerkstoffe nach Anspruch 1 bis 4, **dadurch gekennzeichnet, dass** die Dampfsperre zusätzlich 0,1 bis 10 Gew.-% Additive enthält.

6. Mehrschichtige Lignocellulosewerkstoffe nach Anspruch 1 bis 5, **dadurch gekennzeichnet, dass** eine oder mehrere innere Dampfsperren 5 bis 50% unterhalb der Oberfläche der fertig verpressten mehrschichtigen Lignocellulosewerkstoffe liegen.

7. Mehrschichtige Lignocellulosewerkstoffe nach Anspruch 1, **dadurch gekennzeichnet, dass** die mehrschichtigen Lignocellulosewerkstoffe zusätzlich auf einer Oberfläche eine Dampfsperre enthalten.

8. Verfahren zur Herstellung von mehrschichtigen Lignocellulosewerkstoffen nach einem der Ansprüche 1 bis 7, **dadurch gekennzeichnet, dass** man
A) 30 bis 98 Gew.-% ein- oder mehrere lignocellulosehaltige Stoffe,
B) 0 bis 25 Gew.-% expandierte Kunststoffteilchen mit einer Schüttdichte im Bereich von 10 bis 150 kg/m³,
C) 1 bis 50 Gew.-% eines Bindemittels, ausgewählt aus der Gruppe bestehend aus Aminoplastharz, Phenolformaldehydharz, organisches Isocyanat mit mindestens zwei Isocyanatgruppen oder deren Gemischen und
D) 0 bis 68 Gew.-% Additive,
mischt, die Mischung streut, bei erhöhtem Druck und gegebenenfalls unter erhöhter Temperatur vorverpresst, mindestens 2 Schichten übereinander schichtet, wobei man zwischen diese Schichten eine Dampfsperre, die 0,01 bis 100 Gew.-% Polyisobutylen, 0 bis 99,99 Gew.-% weiterer Polymere und 0 bis 20 Gew.-% Additive enthält, einbringt und anschließend unter erhöhter Temperatur und unter erhöhtem Druck verpresst.

9. Verfahren zur Herstellung von mehrschichtigen Lignocellulosewerkstoffen nach Anspruch 8, **dadurch gekennzeichnet, dass** man die gestreute Mischung nach dem Vorverpressen in mindestens 2 (zwei) Schichten auftrennt, zwischen die aufgetrennten Schichten die Dampfsperre einbringt, die Schichten übereinanderlegtund heiß verpresst.

10. Verfahren zur Herstellung von mehrschichtigen Lignocellulosewerkstoffen nach Anspruch 8, **dadurch gekennzeichnet, dass** man eine Mischung streut, gegebenenfalls vorverpresst, die Dampfsperre auf die Oberfläche legt, eine weitere Mischung, die sich in ihrer Zusammensetzung gegebenenfalls von der ersten Mischung unterscheidet auf die Dampfsperre streut, gegebenenfalls vorverpresst und gegebenenfalls diesen Vorgang solange wiederholt, bis der Schichtaufbau mit innenliegenden Dampfsperren abgeschlossen ist und anschließend heiß verpresst.

11. Mehrschichtiger Lignocellulosewerkstoff, erhältlich nach einem Verfahren gemäß einem der Ansprüche 8 bis 10.

12. Mehrschichtiger Lignocellulosewerkstoff, erhältlich nach einem Verfahren gemäß einem der Ansprüche 8 bis 10.

13. Verwendung der mehrschichtigen Lignocellulosewerkstoffe gemäß einem der Ansprüche 1 bis 12 zur Herstellung von Gegenständen aller Art und im Baubereich.

14. Verwendung eines lignocellulosehaltigen Lignocellulosewerkstoffes gemäß einem der Ansprüche 1 bis 12 zur Herstellung von Möbeln und Möbelteilen, von Verpackungsmaterialien, von Laminatfußböden, als Baumaterialien.
